# EUROPÄISCHE PATENTSCHRIFT

(11) **EP 1 859 209 B1**
(45) Veröffentlichungstag und Bekanntmachung des Hinweises auf die Patenterteilung: **05.10.2011**
(21) Anmeldenummer: 06707360.1
(22) Anmeldetag: 02.03.2006
(51) Int. Cl.: F25B 35/04, F28F 13/18

(54) **VERFAHREN ZUR HERSTELLUNG EINES ADSORBERWÄRMETAUSCHERS**
METHOD FOR PRODUCING AN ADSORPTION HEAT EXCHANGER
PROCÉDÉ POUR PRODUIRE UN ÉCHANGEUR THERMIQUE D'ADSORBEUR

(30) Priorität: 15.03.2005 DE 102005012214; 07.12.2005 DE 102005058624
(43) Veröffentlichungstag der Anmeldung: 28.11.2007
(73) Patentinhaber: SorTech AG, 06120 Halle (DE)
(72) Erfinder: MITTELBACH, Walter, 06108 Halle/Saale (DE); Arnold, Manfred Prof. Dr., Leissling 06667 (DE); Frank, Wiily, Dr., Bad Lauchstädt 06246 (DE)
(74) Vertreter: Dr. Weitzel & Partner
(86) Internationale Anmeldenummer: PCT/EP2006/001883
(87) Internationale Veröffentlichungsnummer: WO 2006/097198

(56) Entgegenhaltungen:
- DE-A1- 4 129 700
- DE-A1- 10 141 524
- DE-A1- 10 141 525
- DE-A1- 19 730 697
- DE-A1- 19 909 030
- US-A- 3 713 281
- US-A- 6 102 107
- US-A1- 2005 005 769
- PATENT ABSTRACTS OF JAPAN Bd. 2000, Nr. 01, 31. Januar 2000 (2000-01-31) -& JP 11 287531 A (TOYOTA CENTRAL RES; DEV LAB INC), 19. Oktober 1999 (1999-10-19)
- PATENT ABSTRACTS OF JAPAN Bd. 1997, Nr. 11, 28. November 1997 (1997-11-28) -& JP 09 189459 A (DENSO CORP), 22. Juli 1997 (1997-07-22)
- PATENT ABSTRACTS OF JAPAN Bd. 2000, Nr. 02, 29. Februar 2000 (2000-02-29) -& JP 11 304383 A (SEIBU GIKEN CO LTD), 5. November 1999 (1999-11-05)
- PATENT ABSTRACTS OF JAPAN Bd. 1999, Nr. 11, 30. September 1999 (1999-09-30) -& JP 11 166772 A (DENSO CORP), 22. Juni 1999 (1999-06-22)

## Beschreibung

Die vorliegende Erfindung betrifft ein Verfahren zur Herstellung eines Adsorberwärmetauschers, insbesondere eines Adsorberwärmetauschers, der eine Wärmetauscherstruktur umfasst, welcher mit einem vorsynthetisierten Feststoff-Sorbensmaterial befüllt wird.

Adsorberwärmetauscher umfassen eine Wärmetauscherstruktur, welche der Zu- und Abfuhr von Wärmeenergie dient und die in einem thermischen Kontakt zu einem Sorbensmaterial stehen, welches Phasenwechsel eines Arbeitsmediums, eines so genannten Sorptivs, zur Bindung und Freisetzung latenter Wärme nutzt. So wird durch die Kondensation eines dampfförmigen Arbeitsmediums Wärme freigesetzt, umgekehrt kann die über die Wärmetauscherstruktur zugeführte Wärmeenergie zum erneuten Verdampfen des Sorptivs verwendet werden. Zur Durchführung der Phasenwechsel des Sorptivs werden meist Feststoffmaterialien, so genannte Sorbensmaterialien, verwendet. Charakterisierend für solche Sorbensmaterialien sind deren offenporige Struktur mit einem großen Oberflächen- zu Volumenverhältnis. Typische Oberflächengrößen von Sorbensmaterialien können einige 100 m²/g Sorbensmaterial erreichen. Die inneren Hohlräume in diesen Materialien weisen molekulare Größendimensionen auf. Hierauf gründet die Wirkung der Sorbensmaterialien, Fremdatome bzw. Fremdmoleküle in ihre mikroporöse Struktur aufzunehmen und so von der Gasphase in einen gebundenen Zustand zu überführen. Beispiele für in Adsorberwärmetauschern verwendete Sorbensmaterialien sind Tone, etwa Bentonit, Silicagel oder Zeolithe. Für diese Sorbensmaterialien wird als Arbeitsmedium üblicherweise Wasser verwendet, welches eine hohe Kondensationswärme von 2000 kJ/kg aufweist und darüber hinaus ein unproblematisch zu handhabendes Arbeitsmedium darstellt.

Streng genommen wird das Arbeitsmedium, welches einem Phasenwechsel unterliegt, mit zwei verschiedenen Fachtermini bezeichnet. Das aufzunehmende, noch nicht sorbierte Arbeitsmedium wird als Sorptiv bezeichnet, wohingegen das an- oder eingelagerte (sorbierte) Arbeitsmedium als Sorbat bezeichnet wird. Um die Vielzahl der verschiedenen Begriffe in dieser Beschreibung zu vermindern, wird das Arbeitsmedium ungeachtet seines Phasenzustandes vorliegend als Sorptiv bezeichnet, auch in jenem Zustand, in welchem es im Sorbensmaterial (auch Sorbent oder Sorptionsmittel genannt) sorbiert ist.

Typische Anwendungen von Adsorberwärmetauschern sind Latentwärmespeicher und Adsorptionswärmepumpen. Erstere dienen der Speicherung thermischer Energie, zweitere verwenden Sorbensmaterialien in der Wärmepumpentechnik.

Wird einem Adsorberwärmetauscher Wärmeenergie von außen zugeführt, beispielsweise durch ein Durchströmen mit einer Wärmeträgerflüssigkeit, so muss die von außen zufließende Wärme in effektiver Weise an das Sorbensmaterial übertragen werden, um das darin befindliche adsorbierte Arbeitsmedium freizusetzen. Für den umgekehrten Fall, dem Ausspeichern von Wärmeenergie, das heißt einer Energieffussrichtung aus dem Adsorberwärmetauscher heraus, ist die aufgrund der Kondensation des Arbeitsmediums am Sorbensmaterial freigesetzte Wärmeenergie wiederum aus dem Adsorberwärmetauscher nach außen abzutransportieren. Da die bekannten Sorbensmaterialien schlechte Wärmeleitfähigkeiten aufweisen, werden Adsorberwärmetauscher üblicherweise als Kombination einer Wärmetauscherstruktur mit hoher thermischer Leitfähigkeit- und dem Sorbensmaterial, das zur Bindung und Freisetzung des Arbeitsmediums dient, hergestellt. Die Wärmetauscherstrukturen bestehen meist aus metallischen Materialien, beispielsweise aus Kupfer, Aluminium oder rostfreiem Stahl, auch andere Materialien mit hoher Wärmeleitfähigkeit, wie Keramiken oder bestimmte Kunststoffe, sind denkbar.

Wärmetauscher weisen wenigstens im Teilbereichen Hohlkörper zur Durchströmung mit einem Wärmeträgermedium auf, welches jedoch selbst üblicherweise mit dem Sorbensmaterial nicht in direkten Kontakt tritt. Die Wärmetauscherstruktur tritt dann wiederum in thermischen Kontakt zum Sorbensmaterial. Im einfachsten Fall geschieht dies in Form einer losen Schüttung, wobei das Sorbensmaterial meist in Pulverform oder durch die Vermischung mit einem Binder in Form von Pellets vorliegt. Ein solcher einfach zu realisierender Aufbau weist jedoch mehrere Nachteile auf. So besteht meist eine schlechte Wärmeübertragung zwischen dem Sorbensmaterial und den Wandungen der Wärmetauscherstruktur. Diese ist noch weiter verschlechtert für jene Bereiche des Sorbensmaterials, welche sich in keinem direkten Anlagekontakt zur Wärmetauscherstruktur befindet.

Ein weiteres Problem besteht darin, das Sorptiv in Dampfform möglichst gut dem Sorbensmaterial zuzuführen. Dies setzt jedoch voraus, dass zusätzlich zur mikroporösen Struktur im Sorbensmaterial durchgängige Kanalstrukturen für den konvektiven Transport des dampfförmigen Arbeitsmediums vorliegen. Wird Sorbensmaterial wie oben dargestellt im einfachsten Fall in Form einer Schüttung in eine vorgefertigte Wärmetauscherstruktur eingebracht, so ist darauf zu achten, dass ein solches Kanalsystem im Sorbensmaterial für das dampfförmige Sorptiv erhalten bleibt. Dies setzt voraus, dass das Sorbensmaterial nicht stark verdichtet wird. Zur Lösung dieser Problematik wird daher meist anstatt eines pulverförmigen Sorbensmaterials ein solches in granularer Form oder in Form von Pellets eingebracht. Dies hat jedoch den Nachteil, dass wiederum durch den meist nur punktuellen Anlagekontakt zwischen den einzelnen Körnern des Sorbensmaterials die Wärmeleitung von und zur Wärmetauscherstruktur verschlechtert wird.

Für die Konstruktion effizienter Adsorberwärmetauscher liegt somit ein Zielkonflikt vor. Auf der einen Seite ist ein möglichst guter thermischer Kontakt zwischen dem Sorbensmaterial und der Wärmetauscherstruktur notwendig. Zum anderen muss die offenporige Struktur der Sorbensmaterialien erhalten bleiben und zusätzlich ist im Sorbensmaterial ein System makroskopischer Kanäle für den Transport des gasförmigen Sorptivs auszubilden. Zur Lösung dieser Problematik sind Adsorberwärmetauscher bekannt geworden, bei denen wenigstens Teile der Wärmetauscherstruktur aus dünnen Metallplatten oder Metallfolien gebildet werden, welche vorab mit einer Beschichtung aus Sorbensmaterialien versehen werden. So geht aus der JP 11300147 A die Herstellung einer beschichteten Folie hervor, auf deren Oberfläche Sorbenspartikel wenigstens teilweise in eine Klebstoffschicht eingebettet sind. Zusätzlich sind diese Sorbenspartikel mit einem flächig aufgebrachten Film abgedeckt. Zum Aufbau eines Adsorberwärmetauschers werden die solchermaßen beschichteten Folien in Form einer honigwabenartigen Struktur gefaltet.

Ferner ist aus der DE 41 29 700 C2 ein Verfahren zur Herstellung von Adsorber-Wärmetauscherelementen bekannt geworden. Hierbei wird ein Wärmetauscherelement aus einer Vielzahl von flachen Platten aufgebaut, wobei jede dieser Platten eine Beschichtung mit einer Klebstoffschicht und darin befindlichen anorganischen Adsorberpartikeln trägt. Zur Fertigstellung des Wärmetauscherelements wird ein Teil dieser Platten gewellt und ein Stapelsystem aus einer Abfolge von jeweils einer gewellten und einer ebenen Platte gebildet. Ausgangspunkt für die Herstellung der flachen Platten sind Aluminiumfolien mit einer Materialstärke von 30 µm, auf die beidseitig mittels Walzen eine Klebstoffschicht mit einer Dicke von 10-30 µm aufgestrichen wird. Hierzu wird ein Kleber aus der Polyvinyl-Acetat-Gruppe verwendet. Dieser Kleber wird zunächst teilweise getrocknet, so dass die Klebstoffschicht noch viskos, jedoch noch nicht erstarrt ist. Sodann werden synthetische Zeolithpartikel mit einem Durchmesser < 100 µm auf die Klebstoffschicht aufgeblasen, wobei die Zeolithpartikel im Wesentlichen vollständig in die Klebstoffschicht eingebettet sind und eine Beladung mit Zeolith von 12 g/m² entsteht. In einem weiteren Verfahrensschritt findet ein kurzzeitiges Erhitzen innerhalb von etwa 10 s auf eine Temperatur von 100 - 250 °C statt. Durch diesen schnellen Erhitzungsvorgang werden die in den Poren der Zeolithpartikel gebundenen Gase freigesetzt, wodurch sich Kanäle für den späteren Gasaustausch zwischen den eingebetteten Zeolithpartikeln und der Oberfläche der Beschichtung ausbilden. Zur Verbesserung der Kanalausbildung wird vorgeschlagen, in den Klebstoff zusätzliche Aufblähmittel einzubringen. Im Folgenden erstarrt und trocknet die Klebstoffschicht in einer Trockenheizvorrichtung.

Der Aufbau von Adsorberwärmetauschern aus bereits mit Sorbensmaterial beschichteten Folien hat den Vorteil, dass eine sorgfältige Ausgestaltung des Kontaktbereichs zwischen der Wandung der Wärmetauscherstruktur und dem Sorbensmaterial möglich ist. Ferner kann durch die entsprechende dreidimensionale Gestaltung der Folienstrukturen ein geeignetes Kanalsystem für das dampfförmige Sorptiv vorgesehen werden. Nachteilig an einem solchen Vorgehen ist jedoch, dass neben den zusätzlichen Arbeitsschritten für die Beschichtung auch die Weiterverarbeitung der Folien nach dem Aufbringen der Beschichtung aufwendig ist. Aufgrund der aufgebrachten Sorbensmaterialien müssen die Folien vorsichtig gehandhabt werden. Darüber hinaus sind die meist dünnen Folien in ihrer statischen Stabilität begrenzt. Beide Faktoren erschweren eine möglichst freie Gestaltung in der Ausbildung einer Wärmetauscherstruktur. Darüber hinaus ist zu berücksichtigen, dass die bekannten Folienbeschichtungen in ihrer Beladung mit Sorbensmaterial limitiert sind. Höhere Beladungsdichten setzen größere Sorbenspartikel voraus, welche jedoch mit den bekannten Folienbeschichtungsverfahren nur eingeschränkt handhabbar sind.

Weiterhin ist aus der JP 2000018767 A ein Herstellungsverfahren für Adsorberwärmetauscher bekannt geworden, bei dem zunächst eine Wärmetauscherstruktur ausgebildet wird, welche dann anschließend mit Sorbensmaterial und Klebestoff befüllt wird. Zur Umgehung der voranstehend beschriebenen Problematik wird in die Wärmetauscherstruktur eine Schüttung aus Sorbensmaterial und einem thermoplastischem Kleber eingebracht. Sowohl das Sorbensmaterial wie auch der Kleber liegen in granularer Form vor, wobei die Korngrößen des Sorbensmaterials und jene des Klebers aufeinander abgestimmt werden. Bei einem anschließenden Aufheizungsschritt schmilzt der Kleber auf und verbindet die einzelnen Sorbensgranulatkörner jeweils punktuell miteinander. Wird die Korngröße des thermoplastischen Klebers hinreichend klein gewählt, so bestehen auch nach dem Aufschmelzschritt des Klebers weiterhin Zwischenräume zwischen den einzelnen Sorbensgranulatkömem, welche für den Transport des gasförmigen Sorptivs vorgesehen sind. Diese Vorgehensweise stellt eine Verbesserung zur losen Schüttung sowohl im Hinblick auf die thermische Leitfähigkeit zwischen den Sorbenskömem als auch bezüglich der mechanischen Verfestigung des Sorbensmaterials dar. Dennoch besteht auch bei einem solchen System die Problematik, dass für einen hinreichenden Transport des gasförmigen Sorptivs kein geeignetes Kanalsystem entsteht. Zusätzlich bestehen Bereiche im Sorbensmaterial, welche aufgrund der zunächst losen Einbringung der Schüttung eine gewisse Distanz zur Wandung der Wärmetauscherstruktur aufweisen und daher nur deutlich verschlechtert an der Wärmeübertragung von und zur Wärmetauscherstruktur beitragen können.

DE 101 41 524 A1 beschreibt die Herstellung einer Wärmetauscheroberfläche mit dem Ziel, einen dünnen Flüssigkeitsfilm darauf auszubilden. Zur Oberflächenbeschichtung wird Sand (Silikat, Aluminiumsilikat, Siliziumoxid) verwendet, der mittels eines Haftvermittlers und insbesondere eines Klebstoffes auf eine Grundfläche aufgebracht wird. Ferner wird Sorbensmaterial in die Wärmetauscherstruktur eingebracht, wobei schwach und nicht klebende Anteile des Sorbensmaterials aus der Wärmetauscherstruktur entfernt werden können.

US 3 713 281 offenbart das Bekleben eines Wärmetauschers in Wellblechform oder in Form eines Drahtgitters mit einem Sorbensmaterial wie Silikagel, welches mittels eines Epoxidharzes am Träger befestigt wird. Vor dem Befüllen des Wärmetauschers mit dem Sorbensmaterial wird keine feste Klebstoffschicht hergestellt, welche aufgeschmolzen und ausgehärtet wird. Stattdessen geht dieses Dokument von einer flüssigen Klebstoffschicht aus, welche eine gewisse Zeit abtrocknet, wobei das Sorbensmaterial auf die noch klebende, nicht ausgehärtete Klebstoffschicht aufgebracht wird.

Der Erfindung liegt die Aufgabe zugrunde, ein Verfahren zur Herstellung eines Adsorberwärmetauschers anzugeben, welches von einer zunächst frei gestalteten und separat aufgebauten Wärmetauscherstruktur ausgeht, welche nachträglich in Verbindung mit einem Sorbensmaterial gebracht wird. Das Kombinationssystem aus Wärmetauscherstruktur und Sorbensmaterial soll eine hohe thermische Leitfähigkeit zwischen den Wandungen der Wärmetauscherstruktur und dem Sorbensmaterial aufweisen und darüber hinaus einen möglichst effizienten Transport des gasförmigen Sorptivs zur mikroporösen Struktur des Sorbensmaterials ermöglichen. Das Verfahren zur Herstellung des Adsorberwärmetauschers sollte sich ferner durch eine einfache Realisierung auszeichnen und die Herstellung von Adsorberwärmetauschern mit einem hohen Adsorptions-/Desorptionsvermögen für das Sorptiv ermöglichen.

Diese Aufgabe wird durch die unabhängigen Ansprüche gelöst. Vorteilhafte Ausgestaltungen ergeben sich aus den Unteransprüchen.

Zur Realisierung der Aufgabe haben die Erfinder zunächst erkannt, dass das Sorbensmaterial in Granulatform mit einer hinreichenden Korngröße so auf den Innenflächen einer Wärmetauscherstruktur verklebt werden muss, dass die einzelnen Granulatkörner des Sorbensmaterials nur teilweise in diese Klebstoffschicht eingebettet werden, das heißt das ein wesentlicher Teil ihrer Oberfläche noch mit der Gasphase des Sorptivs wechselwirken kann und gleichzeitig jedes dieser Granulatkörner in einem hinreichenden thermischen Kontakt zu den Wandungen der Wärmetauscherstruktur steht. In einer vorteilhaften Ausgestaltung sollten keine Granulatkörner des Sorbensmaterials ohne eine solche Klebeverbindung zu den Wandungen der Wärmetauscherstruktur vorliegen. Auf diese Art und Weise entsteht ein System makroskopischer Kanäle im Adsorberwärmetauscher, die für einen effizienten Transport des gasförmigen Sorptivs genutzt werden können.

Ausgangspunkt für die Herstellung eines erfindungsgemäßen Adsorberwärmetauschers ist zunächst eine separat hergestellter Wärmetauscherstruktur. Diese wird nach dem bekannten Verfahren aus Materialien hoher Wärmeleitfähigkeit gefertigt. Als geeignet hierfür haben sich metallische Systeme, beispielsweise aus Kupfer, Aluminium oder Edelstahl, erwiesen. Auch keramische Materialien oder kombinierte Materialsysteme sind hierzu denkbar. Geeignete Wärmetauscherstrukturen realisieren ein Zirkulationssystem für ein Wärmeträgermedium, welches mit dem Außenbereich des Adsorberwärmetauschers in Verbindung steht. Zusätzlich können zur Beheizung der Wärmetauscherstrukturen in diesen Heizdrähte oder andere Wärmequellen eingebettet werden. Zur Erzeugung einer möglichst großen Oberfläche zum Sorbensmaterialsystem hin wird eine lamellen- oder wabenartige Struktur bevorzugt. Diese kann auch schwamm- oder schaumartig sein. Ausgehend von dieser zunächst separat hergestellten Wärmetauscherstruktur wird nun eine Innenbeschichtung mit Sorbensmaterialien wie folgt vorgenommen:

In einem ersten Verfahrensschritt wird auf die zum Sorbensmaterial hinweisende Wandung des Wärmetauschers, diese wird im Folgenden als Innenwandung bezeichnet, eine Klebstoffschicht aufgebracht. Hierzu wird ein Kleber verwendet, welcher zunächst eine feste Schicht ausbildet. Zur Realisierung dieser Klebstoffschichten können unterschiedliche Verfahren, etwa Tauchen, Fluten oder Berieseln verwendet werden. Die Verfahrensschritte der Klebstoffbeschichtung können ferner zur Einstellung einer optimalen Schichtdicke wiederholt werden. Hierbei ist es insbesondere von Vorteil, die Viskosität des aufgetragenen Klebers beispielsweise durch eine Temperierung oder durch eine Anreicherung oder eine Verdampfung mit Lösungsmittel einzustellen. Alternativ ist es auch möglich, den Kleber in festem, pulverförmigem Zustand auf die Wandungen des Wärmetauschers aufzubringen. Eine solche Pulverbeschichtung bietet sich insbesondere auf flächigen Wärmetauscherstrukturen an. Ferner kann der Wärmetauscher zunächst mit pulverförmigem Kleber befüllt werden, der dann wiederum in wandungsnahen Bereichen des Wärmetauschers durch eine Beheizung der Wärmetauscherstruktur aktiviert wird, so dass eine Anhaftung im wandungsnahen Bereich besteht und eine anschließende Entfernung des nicht anhaftenden, pulverförmigen Klebematerials aus den wandungsfernen Bereichen etwa durch Rütteln, Blasen oder Spülen, möglich ist. Unabhängig von der Wahl des Klebers oder dem gewählten Aufbringungsverfahren, muss die Klebstoffschicht im wandungsnahen Bereich zumindest so stabil anhaften, dass beim nachfolgenden Verfahrensschritt, bei dem das Sorbensmaterial in den Wärmetauscher eingebracht wird, keine funktionsbeeinträchtigende Vermengung des Klebers mit dem Sorbensmaterial stattfindet.

Geeignete Kleber sind dadurch gekennzeichnet, dass sie oberhalb einer ersten Temperatur aufschmelzen und oberhalb einer zweiten Temperatur, welche höher als die erste Temperatur liegt, aushärten. Als ein geeigneter Klebstoff hat sich insbesondere Epoxidharz erwiesen. Ein auf Epoxidharz basierender Kleber schmilzt oberhalb einer ersten Temperatur, diese liegt typischerweise bei 50 - 70 °C. Oberhalb einer zweiten Temperatur, welche im Bereich von 100 - 200 °C liegt, findet dann eine Aushärtung statt, wobei im Epoxidharzkleber eine Vernetzung stattfindet und dieser so zu einem Duromer mit hoher Temperaturstabilität und einer entsprechend hohen Glastemperatur aushärtet.

Im ersten Verfahrensschritt zur Ausbildung der festen Klebstoffschicht auf der Innenwandung wird im Falle eines auf Epoxidharz basierenden Klebers bevorzugt ein Lösungsmittel wie Aceton, Methylethylketon oder Methylenchlorid verwendet, um den Klebstoff zunächst zu verflüssigen. Zum Auftrag dieses verflüssigten Klebers wird die Wärmetauscherstruktur in die Epoxidharzlösung getaucht. Der überschüssige Kleber wird dann noch im flüssigen Zustand aus der Wärmetauscherstruktur entfernt und die Klebstoffschicht trocknet zunächst zu einer festen, das heißt im Wesentlichen nicht mehr klebenden Klebstoffschicht aus. Zur Einstellung der Schichtdicke der Klebeschicht kann die Viskosität des Klebers, etwa durch die Einstellung des Lösungsmittelanteils oder der Temperatur, angepasst werden. Ferner ist es auch denkbar, mehrere Klebstoffschichten durch ein Wiederholen der voranstehend genannten Arbeitsschritte aufzubringen. Darüber hinaus sind als weitere Aufbringungsverfahren für die Klebstoffschicht ein Besprühen oder Bestreichen der Wärmetauscherstruktur mit dem Kleber möglich. Außerdem kann anstatt einer Verflüssigung mit Lösemittel eine Verringerung der Viskosität bis zum flüssigen Zustand durch eine Anpassung der Temperatur des Klebers und/oder der Wärmetauscherstruktur erreicht werden. Nach dem Aufbringen des Klebers erstarrt die Klebstoffschicht. Dies wird wiederum durch eine Absenkung der Temperatur bzw. durch eine hinreichende Standzeit bis zum Verflüchtigen des Lösungsmittels bewirkt.

Wird dann eine solchermaßen vorbereitete Wärmetauscherstruktur mit granularem Sorbensmaterial befüllt, so entsteht ohne eine zusätzliche Wärmebehandlung im Wesentlichen keine Klebeverbindung zwischen den eingebrachten Sorbenspartikeln und der die Innenwandung der Wärmetauscherstruktur bedeckenden Klebstoffschicht. Dies hat den Vorteil, dass auf diese Art und Weise die Klebeverbindung kontrolliert hergestellt werden kann und nur für jene Sorbenspartikel realisiert wird, welche sich im unmittelbaren Anlagekontakt zur Innnenwandung der Wärmetauscherstruktur befinden. Hierzu wird der Klebstoffschicht Wärme zugeführt. Dies kann zum einen durch das Einbringen der Wärmetauscherstruktur in einen Wärmeschrank und/oder Ofen oder durch die Bestrahlung mit Infrarotstrahlung. Diesen Wärme- beziehungsweise Energieeintrag kann auch als Energieeintrag von außen bezeichnet werden. Beispielsweise kommt auch ein induktives Aufheizen der Wärmetauscherstruktur in Betracht. Auch ein Aufheizen von innen durch die Zuführung eines Wärmeträgermediums entsprechender Temperatur zur Wärmetauscherstruktur ist denkbar. In einer weiteren Ausgestaltung kann erhitztes Sorbensmaterial zugeführt werden.

Hierbei wird die Erwärmung bezüglich der Zeitdauer und dem gewählten Temperaturverlauf so gesteuert, dass ausgehend von der mittleren Klebstoffdicke und der gewählten Korngröße des granularen Sorbensmaterials die an die Wandung der Wärmetauscherstruktur angrenzenden Sorbenspartikel in deren Anlagebereich mit dem aufgeschmolzenen Kleber benetzt werden, jedoch gleichzeitig mit wesentlichen Teilen ihrer Oberfläche noch aus der Klebstoffschicht herausragen. Die Partikel dringen demnach in die Klebstoffschicht ein, werden allerdings von dieser nicht vollständig umschlossen, so dass diese in Austausch mit dem Sorptiv treten können, das heißt diese sind für die Adsorption und Desorption des Sorptivs und damit für den Umsatz latenter Wärme zugänglich.

Sodann wird die Temperatur in der Wärmetauscherstruktur über die zweite Temperatur erhöht, bei der eine Aushärtung der Klebstoffschicht stattfindet. Im Falle eines Epoxidharzklebers findet dann eine endgültige Vernetzung und die Umwandlung zu einem Duromer statt. Nach Abschluss dieses Vernetzungs- bzw. Aushärtevorgangs oberhalb der zweiten Temperatur entsteht eine stabile, insbesondere temperaturstabile Klebstoffverbindung für die unmittelbar an die Wandung der Wärmetauscherstruktur angrenzenden granularen Sorbenspartikel, ohne dass deren Wechselwirkungsfähigkeit mit der Atmosphäre im Inneren des Adsorberwärmetauschers, das heißt für einen effektiven Austausch mit dem Sorptiv, beeinträchtigt wäre.

In einem bevorzugten weiteren Verfahrensschritt werden dann die nicht mit dem Wandungsbereich verklebten Sorbenspartikel aus der Wärmetauscherstruktur entfernt. Dies kann beispielsweise durch mechanische Maßnahmen, etwa Rütteln, oder durch das Anlegen eines Unterdrucks geschehen. Durch diese Maßnahme entstehen makroskopische Hohlräume und Kanäle, durch die gasförmiges Sorptiv strömen kann. Hierdurch wird ein hinreichender Transport von Sorptiv in Gasform zu den an den Wandungen der Wärmetauscherstruktur verklebten Sorbenspartikeln stattfinden. Diese stehen wiederum in einem hinreichend guten thermischen Kontakt zur Wärmetauscherstruktur, so dass die durch die Phasenwechsel des Sorptivs frei werdende bzw. gebundene latente Wärme auch effektiv über die Wärmetauscherstruktur zu- und abfließen kann.

In einer alternativen Ausgestaltung des erfindungsgemäßen Verfahrens wird die im wandungsnahen Bereich aufgebrachte Klebstoffschicht zur Herstellung einer Verbindung zum Sorbensmaterial nicht aktiviert. Stattdessen wird durch den Verfahrensschritt der Klebstoffauftragung auf den Wärmetauscher bereits die gewünschte lokale Verteilung des Klebers im wandungsnahen Bereich sichergestellt. Dies kann beispielsweise durch eine Befüllung der Wärmetauscherstruktur mit einem pulverförmigen Kleber geschehen, der dann im wandungsnahen Bereich durch ein Aufheizen der Wärmetauscherstruktur seine Klebkraft erhält, wobei der Klebstoff im wandungsfernen Bereich im Wesentlichen nicht klebend und pulverförmig verbleibt. Sodann kann der nicht klebende Anteil aus dem Wärmetauscher entnommen werden. Dies gelingt am besten durch unterstützende mechanische Maßnahmen, wie Rütteln, Blasen oder Spülen. Die flächige Klebstoffschicht im wandungsnahen Bereich behält dann ihre klebende Eigenschaft bei, d.h. eine Aktivierung nachdem das Sorbensmaterial eingebracht wurde, ist für diese Ausgestaltung nicht notwendig.

Nachfolgend wird das erfindungsgemäße Herstellungsverfahren für Adsorberwärmetauscher anhand von Figuren genauer beschrieben.
- Figur 1: zeigt einen Teilausschnitt eines mit dem erfindungsgemäßen Verfahren hergestellten Adsorberwärmetauschers, umfassend eine Wärmetauscherstruktur mit klebend anhaftendem granularen Sorbensmaterial.
- Figur 2: zeigt eine Wärmetauscherstruktur.
- Figur 3: zeigt die Wärmetauscherstruktur aus Figur 2 nach dem Aufbringen einer starren Klebstoffschicht.
- Figur 4: zeigt den mit granularem Sorbensmaterial befüllte Wärmetauscherstruktur aus Figur 3.
- Figur 5: zeigt den Wärmetauscher aus Figur 4 nach Durchführung des Erhitzungsschritt zum Aufschmelzen und Aushärten der Klebstoffschicht und nach dem Entfernen der nicht klebend anhaftenden Sorbenspartikel.

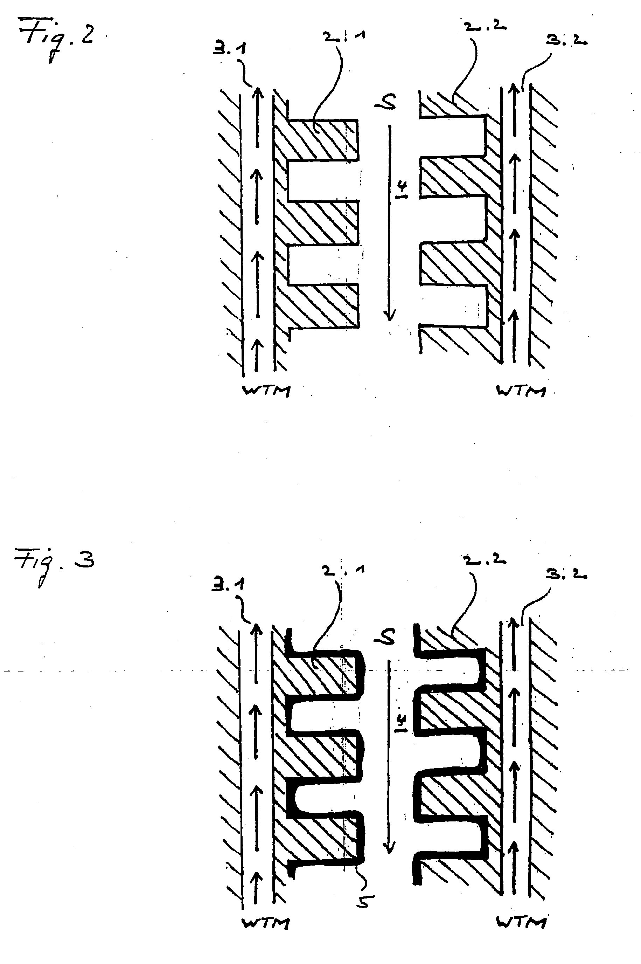

In Figur 2 ist schematisch vereinfacht eine Wärmetauscherstruktur mit Lamellen 2.1, 2.2 dargestellt, welche aus einem Material hoher thermischer Leitfähigkeit bestehen. Üblicherweise wird hierzu ein Metall, beispielsweise Kupfer, Aluminium oder Edelstahl verwendet. Ferner weist die Wärmetauscherstruktur bevorzugt Hohlräume 3.1, 3.2 zur Durchströmung mit einem Wärmeträgermedium (WTM) auf. Diese stehen typischerweise mit dem in Figur 2 nicht näher dargestellten Außenbereich in Verbindung. Über das in diesen Hohlräumen 3.1, 3.2 zirkulierende Wärmeträgermedium (WTM) wird Wärme dem späteren Adsorberwärmetauscher zugeführt bzw. aus diesem ausgespeichert. Eine solche Wärmetauscherstruktur wird typischerweise einem Behälter zugeordnet, der für die Gasphase des Sorptivs dicht ist und so einen Arbeitsraum umschließt, welcher in der vorliegenden Anmeldung als Innenbereich 4 bezeichnet wird und zur Aufnahme des Sorbensmaterials und des Sorptivs S dient. Die Art des

Abschlusses dieses Innenbereichs gegenüber dem Außenbereich hängt wiederum von der Verwendung des Adsorptionswärmetauschers ab. So ist es auch denkbar, dass dieser in ein System eingebracht wird, welches den Übertritt des Sorptivs von einem ersten Bereich, in welchem sich der Adsorptionswärmetauscher befindet, in einen zweiten Bereich ermöglicht.

Im vorliegenden Ausführungsbeispiel umfasst die Wärmetauscherstruktur im Innenbereich 4 lamellenartige Kühlrippen, welche einen Lamellenabstand von 4 mm aufweisen. Dieser und weitere Wärmetauscherstrukturen wurden mit Sorbensmaterial unterschiedlicher Partikelgröße befüllt. Für weitere Versuche wurden Wärmetauscherstrukturen mit Lamellenabständen von 1,6 mm, 2,3 mm, 4 mm und 6 mm verwendet, wobei die Partikelgrößen des granularen Sorbensmaterials variiert und auf die jeweiligen Lamellenabstände angepasst wurden. Die Lamellenabstände der Wärmetauscherstrukturen wurden beginnend ab einem minimalen Abstand von 4 mm auf die jeweilige Partikelgröße angepasst. Als Materialien wurden Kupfer und Aluminium als Lamellen verwendet. Bevorzugt handelt es sich hierbei um strukturierte Lamellen, das heißt diese sind gewellt bzw. gezackt, um ein möglichst hohes Oberflächen- zu Volumenverhältnis bereitzustellen.

Ausgehend von einer separat hergestellten Wärmetauscherstruktur nach Figur 2 wird diese entsprechend eines ersten Verfahrensschritts zur Innenbeschichtung mit einer die Innenwandung benetzenden Klebstoffschicht ausgekleidet, die vor dem Befüllen mit dem Sorbensmaterial eine feste Schicht bildet. Unter einer solchen festen Klebstoffschicht wird in der vorliegenden Anmeldung ein weitestgehender Verlust an Klebekraft verstanden, üblicherweise wird dies durch eine hinreichend lange Trocknung oder eine geeignete Temperatureinstellung der Klebstoffschicht erreicht. Entsprechend eines ersten Ausgestaltungsbeispiels wird als Klebstoff ein Epoxidharzkleber verwendet, der zur Aufbringung einer Klebstoffschicht auf der Innenwandung der Wärmetauscherstruktur mit einem Lösungsmittel, beispielsweise Aceton, vermischt wurde. Dieses Epoxidharz-Lösungsmittelgemisch wird in den Innenbereich 4 der Wärmetauscherstruktur eingebracht, sodann wird überschüssiger Kleber durch Abtropfen aus dem Innenbereich entfernt, so dass sich bevorzugt eine im Wesentlichen durchgehende Klebstoffschicht auf die Innenwandung der Wärmetauscherstruktur legt, ohne dass die Lamellenstruktur verstopft wird. Das heißt, bevorzugt wird eine Klebstoffschicht der Kontur der Innenwandung folgen, ohne die Fläche der Innenwandung der Wärmetauscherstruktur wesentlich zu verringern. Für den Fall eines Epoxidharzklebers mit Lösungsmittelanteilen wird nach einer hinreichenden Standzeit eine Verflüchtigung des Lösungsmittels und damit ein Erstarren der Klebstoffschicht eintreten, so dass mit Abschluss dieses Verfahrensschritts eine feste Klebstoffschicht 5 die Innenwandung überzieht. Im vorliegenden Ausführungsbeispiel wird dieser Erstarrungs- bzw. Trocknungsschritt durch eine Temperaturbehandlung bei 50 °C beschleunigt, diese Nachtrocknung wird für eine Zeitdauer von etwa 3 Stunden durchgeführt.

Die Schichtdicke der Klebstoffschicht wird auf die Größenverteilung der Sorbenspartikel abgestellt. Werden beispielsweise Sorbenspartikel in einem Größenbereich 10 - 1000 µm und vorzugsweise 20 - 50 µm verwendet, so wird die Stärke der Klebstoffschicht so angepasst, dass diese beim Herstellen einer Klebeverbindung zu den Sorbenspartikeln diese nur teilweise benetzt. In einer bevorzugten Ausgestaltung wird hierzu die Schichtdicke in einem Bereich von einem Drittel bis zu zwei Drittel der Partikeldurchmesser und insbesondere des mittleren Partikeldurchmessers eingestellt. In einer besonders bevorzugten Ausgestaltung entspricht die Auftragsstärke der Klebstoffschicht im Mittel der halben Partikelgröße der Sorbenspartikel, das heißt bei im Wesentlichen runden Sorbenspartikel wird für die Schichtdicke des Klebstoffs im Wesentlichen deren Radius angenommen. Bei kugelförmigen Sorbenspartikeln mit einer Größenverteilung von 100 - 200 µm wird daher bevorzugt eine mittlere Schichtdicke für die Klebstoffschicht von 50 µm aufgebracht.

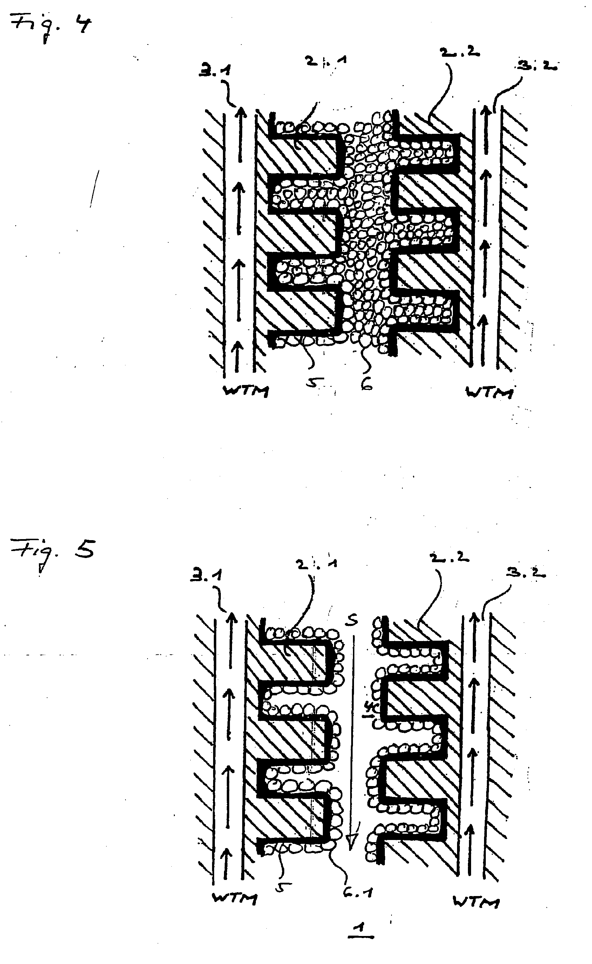

In Figur 4 ist ein weiterer Verfahrensschritt, nämlich die Befüllung mit Adsorbensmaterial in granularer Form dargestellt. Als Adsorbensmaterial können beispielsweise synthetisch hergestelltes Zeolith oder Silicagel verwendet werden. Auch Aktivkohle kommt als Adsorbensmaterial in Betracht. Gemäß eines ersten Ausführungsbeispiels wird eine Körnung des Sorbensmaterials von 0,8 -1,0 mm verwendet. In weiteren Ausgestaltungen wurden für erfindungsgemäße Absorberwärmetauscher Sorbenspartikel mit einer Größenverteilung von 100 - 200 µm und von 1 - 2 mm verwendet. Vorteilhafterweise kann eine ausreichende Befüllung auch der kleinen Hohlräume in der Wärmetauscherstruktur durch mechanische Maßnahmen, etwa durch Rütteln oder einen gewissen Einpressdruck, sichergestellt werden. Für den Fall, dass die Wärmetauscherstruktur so ausgebildet ist, dass der Innenbereich 4 vor der Einbringung des Sorbensmaterials nicht komplett durch eine behälterartige Struktur umschlossen ist, kann eine solche Wärmetauscherstruktur von einer passgenauen, mit silikoniertem Papier ausgekleideten Form umhüllt werden. Eine derartige im Beschichtungsbereich wenigstens partiell offene Wärmetauscherstruktur kann dann in einem nachfolgenden Verfahrensschritt in einen geeigneten Behälter eingebracht werden, der zur Abschließung eines das Sorbensmaterial und das Sorptiv enthaltenen Arbeitsbereichs dient.

Unmittelbar nach Einbringung des Sorbensmaterials in Form einer losen Schüttung besteht im Wesentlichen keine Klebekontakt zwischen der festen Klebstoffschicht 5 und dem Sorbensmaterial 6. Dies wird erst durch einen weiteren Wärmebehandlungsschritt erzielt, wobei durch die Wahl des Temperaturprofils eine genaue Kontrolle in der Ausbildung der Klebverbindung zwischen der ursprünglich starren Klebstoffschicht und den unmittelbar angrenzenden Sorbenspartikeln 6.1 möglich wird. Zur Durchführung dieses Verfahrensschritts muss der in Form einer festen Schicht aufgebrachte Kleber 5 weiterhin die Eigenschaft aufweisen, dass er oberhalb einer ersten Temperatur T1 verflüssigbar ist und oberhalb einer zweiter Temperatur T2, welche höher als die erste Temperatur T1 ist, erstarrt. Diese geforderte Eigenschaft lässt sich durch einen Epoxidharzkleber realisieren. Üblicherweise wird für ein Epoxidharz die erste Temperatur T1, bei der der Kleber aufschmilzt, im vorliegenden Ausführungsbeispiel in einem Bereich von 60 - 66 °C liegen. Als zweite Temperaturschwelle, welche zur endgültigen Aushärtung der Klebstoffschicht führt, ist für Epoxidharz eine Temperatur von 120 - 140 °C und insbesondere 120 °C ausreichend. Durch das Fahren einer Temperaturrampe von einer Temperatur unterhalb der ersten Temperatur auf eine Temperatur oberhalb der zweiten Temperatur findet zunächst eine Aufschmelzung der ursprünglich festen Klebstoffschicht 5 statt. Dadurch benetzt der Kleber die unmittelbar angrenzenden Sorbensteilchen 6.1, und zwar bevorzugt so, dass sie mit ihrem überwiegenden Oberflächenanteil noch aus der Klebstoffschicht herausragen. Im Laufe eines weiteren Temperaturanstieges wird dann die zweite Temperatur überschritten. Im Falle eines Epoxidharzklebers tritt dann eine Vernetzung ein und es bildet sich ein temperaturstabiler Duromer. Gemäß des hier dargestellten Ausführungsbeispiels wird die Erwärmung zur Aufschmelzung der Klebstoffschicht, der Verklebung der wandungsangrenzenden Sorbensteilchen und dem endgültigen Aushärten durch eine Erhitzung der Wärmetauscherstruktur über eine Zuleitung von Wärmeträgerflüssigkeit mit einer Temperatur von 180 °C für eine Zeitdauer von 30 Minuten erreicht.

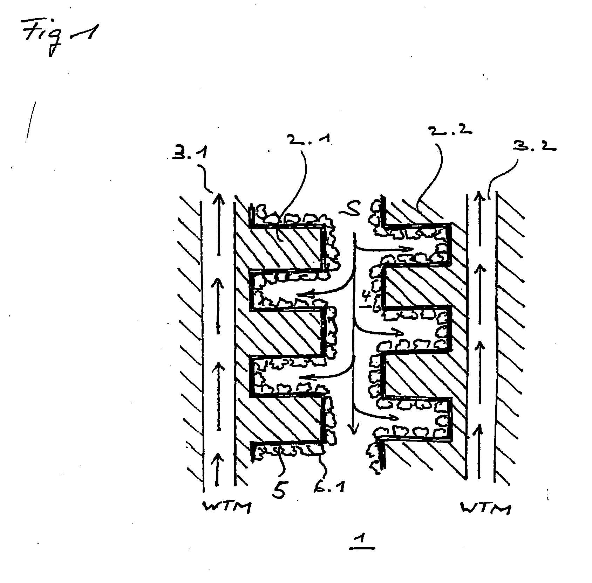

In einem weiteren Verfahrensschritt werden dann die nicht verklebten, das heißt die wandungsfernen Sorbenspartikel aus dem Innenbereich 4 entfernt. Dies kann wiederum durch geeignete mechanische Maßnahmen, etwa durch Rütteln, unterstützt werden. Als Ergebnis entsteht eine Wärmetauscherstruktur mit einer Innenbeschichtung aus Sorbensmaterial, wie sie in Figur 5 schematisch skizziert ist. Die Sorbenspartikel kleiden lediglich die Innenwandung aus und sind jeweils an dieser Innenwandung verklebt, wobei die Verklebung nur punktuell ausgebildet ist, das heißt die Sorbensteilchen ragen mit wesentlichen Teilen aus der Klebstoffschicht heraus und können mit ihrer noch weitestgehenden intakten unbehandelten Oberfläche in einen Austausch mit einem zugeführten Sorptiv treten. Abgesehen von dem unmittelbaren Wandungsbereich befinden sich im Innenbereich 4 gemäß einer bevorzugten Ausgestaltung keine nicht verklebten Sorbenspartikel. Hierdurch wird es dem Sorptiv ermöglicht, ungehindert den Sorbensteilchen zuzuströmen, das heißt hinreichend große Bereiche im Innenbereich 4 bleiben für den konvektiven Transport des dampfförmigen Sorptivs frei. Dieser ungehinderte Zustrom des Sorptivs S zu den Sorbensteilchen 6.1 an den Innenwandungen, die aufgrund der Klebeverbindung einen guten thermischen Kontakt aufweisen, ist in Figur 1 nochmals schematisch dargestellt. Die weiteren Bezugszeichen entsprechen jenen aus den Figuren 2 bis 5. Ein weiterer Vorteil der Ausbildung einer zunächst starren Klebstoffschicht auf den Innenwandungen der Wärmetauscherstruktur ist darin zu sehen, dass durch die Ausbildung einer geschlossenen Schicht zugleich auch ein Korrosionsschutz für die metallischen Teile der Wärmetauscherstruktur gegeben ist. Ein solcher Schutz für das Wärmetauschermaterial ergibt sich nicht für lose Schüttungen des Sorbensmaterials gemäß dem Stand der Technik bzw. für lediglich punktuell untereinander verklebte Sorbenspartikel. Neben der im Wesentlichen vollständigen Bedeckung der Innenwandung der Wärmetauscherstruktur ist es für einen hinreichenden Korrosionsschutz ferner notwendig, dass die Klebstoffschicht im Wesentlichen geschlossen, das heißt nicht porös ist. Dies ist durch die Ausbildung einer zunächst festen und dann durch thermische Behandlung aufgeschmolzenen und aushärtenden Klebstoffschicht gegeben.

Weitere Ausgestaltungen der Erfindung sind denkbar. So kann beispielsweise die Art des Sorbensmaterials variiert werden. Entsprechend einer vorteilhaften Ausgestaltung der Erfindung werden Zeolithe verwendet, welche eine Körnung von 0,2 - 0,3 mm zur Beschichtung eines Latentwärmetauschers mit einem Lamellenabstand von 2 mm aufweisen. Bevorzugt wird somit eine Anpassung der Korngröße der Sorbensmaterialien an die geometrische Gestaltung der Wärmetauscherstruktur. Für eine entsprechend angepasste Wärmetauscherstruktur sind demnach auch Sorbensmaterialien kleinerer Korngröße, beispielsweise 100 - 200 µm, sowie solche mit großer Korngröße, etwa von 1 - 2 mm, von Vorteil. Besonders bevorzugt wird eine homogene Korngrößenverteilung, da dies zu einer gleichmäßigen an der Innenwandung der Wärmetauscherstruktur klebend anhaftenden Schicht mit Sorbensmaterial führt. Entsprechend einer Weitergestaltung können jedoch auch unterschiedliche Korngrößen für das Sorbensmaterial gemischt werden. Beispielsweise können bimodale Korngrößenverteilungen verwendet werden, dies ist insbesondere bei der Verwendung von großen Körnungen vorteilhaft. Mit dem erfindungsgemäßen Verfahren können auch größere Sorbenspartikel mit 1 - 2 mm Durchmesser und größer an den Innenwandungen der Wärmetauscherstruktur verklebt werden, wodurch Beschichtungen mit 60 - 500 g Sorbensmaterial pro m² möglich sind. Solchermaßen große Sorbenspartikel ragen hinreichend weit aus der Klebstoffschicht heraus, bieten somit dem Sorptiv eine große, nicht diffusionsdicht abgedeckte Oberfläche. Durch die Verwendung zusätzlicher kleiner Sorbenspartikel können dann entstehende Zwischenräume zwischen diesen großen Sorbenspartikeln an der Innenwandung der Wärmetauscherstruktur abgedeckt werden, wodurch nochmals die Beladungsdichte des Sorbensmaterials steigt.

Mit dem erfindungsgemäßen Verfahren können auch irregulär geformte Sorbenspartikel zur Beschichtung von Wärmetauscherstrukturen verwendet werden. So ist es auch denkbar, das Sorbensmaterial in Form von Bruchstücken zufälliger Korngröße und mit einer breit streuenden Partikelgrößenverteilung zu verwenden. Dies schließt auch die Verwendung von staubförmigen Anteilen und größeren Bruchstücken sowie eine entsprechende Mischung daraus ein. So ist es denkbar, dass die kleineren wie auch die größeren Partikel jeweils nur partiell von der Klebstoffschicht benetzt werden, was insbesondere durch eine lediglich oberflächennahe Aufschmelzung oder durch ein schnelles Durchfahren des schmelzflüssigen Bereichs bis zum Bereich des Aushärtens des Klebers erreicht wird. Ferner können auch die Benetzungseigenschaften des Klebers auf das gewählte Sorbensmaterial angepasst werden, so dass zwar eine Verklebung der Sorbenspartikel an den Wandungen der Wärmetauscherstruktur gelingt, jedoch weite Teile von deren Oberflächen einen ungehinderten Austausch mit dem Sorptiv vollziehen können.

## Patentansprüche

1. Verfahren zur Herstellung eines Adsorptionswärmetauschers,
**gekennzeichnet durch** die folgenden Verfahrensschritte:
1.1 Herstellung einer Wärmetauscherstruktur;
1.2 Ausbildung einer Klebstoffschicht (5) auf der Wärmetauscherstruktur, wobei für die Klebstoffschicht (5) ein Klebstoff verwendet wird, der oberhalb einer ersten Temperatur aufschmilzt und oberhalb einer zweiten Temperatur, welche höher als die erste Temperatur ist, aushärtet;
1.3 Einbringen eines Sorbensmaterials (6) in die Wärmetauscherstruktur, wobei vor dem Einbringen die Klebstoffschicht (5) fest ist;
1.4 nach dem Einbringen des Sorbensmaterials (6) in die Wärmetauscherstruktur wird die Klebstoffschicht (5) auf eine Temperatur oberhalb der ersten Temperatur gebracht, wobei die Klebstoffschicht (5) aufschmilzt und eine Klebeverbindung zu dem unmittelbar an die Klebstoffschicht (5) angrenzenden Sorbensmaterial ausgebildet wird;
1.5 Erwärmen der Klebstoffschicht (5) auf eine Temperatur oberhalb der zweiten Temperatur zur Aushärtung der Klebstoffschicht (5);
1.6 Entfernen von nicht oder schwach klebenden Anteilen des Sorbensmaterials (6) aus der Wärmetauscherstruktur.

2. Verfahren zur Herstellung eines Adsorptionswärmetauschers nach Anspruch 1, **dadurch gekennzeichnet, dass** das Sorbensmaterial (6) bei der Einbringung in die Wärmetauscherstruktur in granularer Form vorliegt.

3. Verfahren zur Herstellung eines Adsorptionswärmetauschers nach wenigstens einem der Ansprüche 1 oder 2, **dadurch gekennzeichnet, dass** der Kleber zur Herstellung einer Klebstoffschicht (5) auf der Wärmetauscherstruktur im Urzustand flüssig ist oder durch Vermischung mit einem Lösungsmittel verflüssigt wird oder der Kleber zur Herstellung der Klebstoffschicht (5) in festem, pulverförmigem Zustand auf die Wärmetauscherstruktur aufgebracht wird.

4. Verfahren zur Herstellung eines Adsorberwärmetauschers nach wenigstens einem der Ansprüche 1 bis 3, **dadurch gekennzeichnet, dass** als Klebstoff ein Epoxidharzkleber verwendet wird.

5. Verfahren zur Herstellung eines Adsorberwärmetauschers nach wenigstens einem der Ansprüche 1 bis 4, **dadurch gekennzeichnet, dass** die feste Klebstoffschicht (5) durch das Einbringen einer flüssigen Mischung aus Klebstoff und Lösungsmittel in die Wärmetauscherstruktur und/oder bei einer Temperatur, bei welcher der Kleber schmelzflüssig ist, hergestellt wird.

6. Verfahren zur Herstellung eines Adsorberwärmetauschers nach wenigstens einem der Ansprüche 1 bis 5, **dadurch gekennzeichnet, dass** das Sorbensmaterial (6) Silicagel, Zeolith, Ton und/oder Aktivkohle umfasst.

7. Verfahren zur Herstellung eines Adsorberwärmetauschers nach wenigstens einem der Ansprüche 1 bis 6, **dadurch gekennzeichnet, dass** das Sorbensmaterial (6) eine Korngröße von ≥ 0,1 mm, und bevorzugt ≥ 0,2 mm aufweist.

8. Verfahren zur Herstellung eines Adsorberwärmetauschers nach wenigstens einem der Ansprüche 1 bis 7, **dadurch gekennzeichnet, dass** der Klebstoff oberhalb der zweiten Temperatur vernetzend aushärtet.

9. Verfahren zur Herstellung eines Adsorberwärmetauschers nach wenigstens einem der Ansprüche 1 bis 8, **dadurch gekennzeichnet, dass** die feste Klebstoffschicht (5) so ausgebildet wird, dass im Wesentlichen die gesamte Innenfläche der Wärmetauscherstruktur mit einer geschlossenen Schicht bedeckt ist.

10. Verfahren zur Herstellung eines Adsorberwärmetauschers nach wenigstens einem der Ansprüche 1 bis 9, **dadurch gekennzeichnet, dass** die Erwärmung der Wärmetauscherstruktur auf eine Temperatur oberhalb der ersten Temperatur und/oder auf eine Temperatur oberhalb der zweiten Temperatur durch die Zuführung eines erhitzten Wärmeträgermediums zur Wärmetauscherstruktur bewirkt wird und/oder ein Energieeintrag von außen, insbesondere ein Strahlungsenergieeintrag, insbesondere in einem Ofen, und/oder durch induktive Aufheizung bewirkt wird.

11. Verfahren zur Herstellung eines Adsorberwärmetauscher nach wenigstens einem der Ansprüche 1 bis 10, **dadurch gekennzeichnet, dass** das Sorbensmaterial (6) vor dem Einbringen in die Wärmetauscherstruktur erhitzt wird.

## Claims

1. A method for producing an adsorption heat exchanger, **characterized by** the following method steps:
1.1 producing a heat exchanger structure;
1.2 forming an adhesive layer (5) on the heat exchanger structure, with an adhesive being used for the adhesive layer (5) which melts down above a first temperature and solidifies above a second temperature which is higher than the first temperature;
1.3 introducing a sorbent material (6) into the heat exchanger structure, with the adhesive layer (6) being solid prior to the introduction;
1.4 bringing the adhesive layer (5) to a temperature above the first temperature after the introduction of the sorbent material (6) into the heat exchanger structure, with the adhesive layer (5) melting down and forming an adhesive connection with the sorbent material directly adjacent to the adhesive layer (5);
1.5 heating the adhesive layer (5) to a temperature above the second temperature for solidification of the adhesive layer (5);
1.6 removing weakly adhesive or non-adhesive portions of the sorbent material (6) from the heat exchanger structure.

2. A method for producing an adsorption heat exchanger according to claim 1, **characterized in that** the sorbent material (6) is present in granular form during the introduction into the heat exchanger structure.

3. A method for producing an adsorption heat exchanger according to at least one of the claims 1 or 2, **characterized in that** the adhesive for producing an adhesive layer (5) on the heat exchanger structure is liquid in the original state or is liquefied by mixture with a solvent or the adhesive for producing the adhesive layer (5) is applied in a solid powdery state to the heat exchanger structure.

4. A method for producing an adsorption heat exchanger according to at least one of the claims 1 to 3, **characterized in that** an epoxy resin adhesive is used as an adhesive.

5. A method for producing an adsorption heat exchanger according to at least one of the claims 1 to 4, **characterized in that** the solid adhesive layer (5) is produced by the introduction of a liquid mixture of adhesive and solvent into the heat exchanger structure and/or at a temperature at which the adhesive is molten.

6. A method for producing an adsorption heat exchanger according to at least one of the claims 1 to 5, **characterized in that** the sorbent material (6) comprises silica gel, zeolite, clay and/or active carbon.

7. A method for producing an adsorption heat exchanger according to at least one of the claims 1 to 6, **characterized in that** the sorbent material has a grain size of ≥ 0.1 mm, and preferably ≥ 0.2 mm.

8. A method for producing an adsorption heat exchanger according to at least one of the claims 1 to 7, **characterized in that** the adhesive cross-linking solidifies above the second temperature.

9. A method for producing an adsorption heat exchanger according to at least one of the claims 1 to 8, **characterized in that** the solid adhesive layer (5) is formed in such a way that substantially the entire inside surface of the heat exchanger structure is covered with a closed layer.

10. A method for producing an adsorption heat exchanger according to at least one of the claims 1 to 9, **characterized in that** the heating of the heat exchanger structure to a temperature above the first temperature and/or a temperature above the second temperature is produced by the supply of a heated heat carrier medium to the heat exchanger structure and/or by energy input from the outside, especially radiation energy input, especially in a furnace, and/or by inductive heating.

11. A method for producing an adsorption heat exchanger according to at least one of the claims 1 to 10, **characterized in that** the sorbent material (6) is heated prior to introduction into the heat exchanger structure.

## Revendications

1. Procédé de fabrication d'un échangeur thermique d'adsorbeur, **caractérisé par** les phases de procédé suivantes:
1.1 Fabrication d'une structure d'échangeur thermique;
1.2 Application d'une couche d'adhésif (5) sur la structure d'échangeur thermique, procédé dans lequel la couche d'adhésif (5) comporte un adhésif fondant au-dessus d'une première température et durcissant au-dessus d'une seconde température qui est supérieure à la première température;
1.3 Adjonction d'un matériau sorbant (6) dans la structure d'échangeur thermique, où la couche d'adhésif (5) est solide avant ladite adjonction;
1.4 Après ladite adjonction du matériau sorbant (6) dans ladite structure d'échangeur thermique, on porte la couche d'adhésif (5) à une température supérieure à la première température, provoquant la fusion de la couche d'adhésif (5) et la formation d'une liaison adhésive avec le matériau sorbant immédiatement jouxtant la couche d'adhésif (5);
1.5 Chauffage de la couche d'adhésif (5) à une température supérieure à la seconde température pour durcir la couche d'adhésif (5);
1.6 Extraction de la structure d'échangeur thermique des portions du matériau sorbant (6) qui ne sont pas collées ou à peine collées.

2. Procédé de fabrication d'un échangeur thermique d'adsorbeur selon la revendication 1, **caractérisé en ce que** le matériau sorbant (6) des deux adjonctions dans la structure d'échangeur thermique est présent sous forme granulaire.

3. Procédé de fabrication d'un échangeur thermique d'adsorbeur, selon l'une au moins des revendications 1 ou 2, **caractérisé en ce que** la colle entrant dans la fabrication d'une couche d'adhésif (5) sur la structure d'échangeur thermique est liquide à l'origine ou bien se liquéfie par mélange avec un solvant ou encore la colle entrant dans la fabrication de la couche d'adhésif (5) est appliquée sur la structure d'échangeur thermique sous forme solide, en poudre.

4. Procédé de fabrication d'un échangeur thermique d'adsorbeur selon l'une au moins des revendications 1 à 3, **caractérisé en ce que** l'adhésif utilisé est une colle à base de résine époxy.

5. Procédé de fabrication d'un échangeur thermique d'adsorbeur selon l'une au moins des revendications 1 à 4, **caractérisé en ce que** l'on obtient la couche d'adhésif solide (5) par adjonction d'un mélange liquide d'adhésif et de solvant dans la structure d'échangeur thermique et/ou à une température à laquelle la colle est en fusion.

6. Procédé de fabrication d'un échangeur thermique d'adsorbeur selon l'une au moins des revendications 1 à 5, **caractérisé en ce que** le matériau sorbant (6) comprend du gel de silice, du zéolite, de l'argile ou du charbon actif.

7. Procédé de fabrication d'un échangeur thermique d'adsorbeur selon l'une au moins des revendications 1 à 6, **caractérisé en ce que** le matériau sorbant (6) présente une taille de grain ≥ 0.1 mm et de préférence ≥ 0.2 mm.

8. Procédé de fabrication d'un échangeur thermique d'adsorbeur selon l'une au moins des revendications 1 à 7, **caractérisé en ce que** la colle durcit par réticulation au-dessus de la seconde température.

9. Procédé de fabrication d'un échangeur thermique d'adsorbeur selon l'une au moins des revendications 1 à 8, **caractérisé en ce que** la couche d'adhésif solide (5) est constituée de telle sorte que pratiquement l'ensemble de la face interne de la structure d'échangeur thermique est recouvert d'une couche fermée.

10. Procédé de fabrication d'un échangeur thermique d'adsorbeur selon l'une au moins des revendications 1 à 9, **caractérisé en ce que** l'on porte la structure d'échangeur thermique à une température supérieure à la première température et/ou à une température supérieure à la seconde température par l'acheminement d'un fluide d'échangeur thermique chauffé dans la structure d'échangeur thermique et/ou l'on utilise un apport d'énergie venant de l'extérieur, en particulier un apport d'énergie rayonnante, en particulier dans un four et/ou produit par chauffage inductif.

11. Procédé de fabrication d'un échangeur thermique d'adsorbeur selon l'une au moins des revendications 1 à 10, **caractérisé en ce que** le matériau sorbant (6) avant ladite adjonction dans la structure d'échangeur thermique est chauffé.
